# EUROPÄISCHE PATENTSCHRIFT

(11) **EP 2 496 396 B1**
(45) Veröffentlichungstag und Bekanntmachung des Hinweises auf die Patenterteilung: **23.10.2013**
(21) Anmeldenummer: 10800691.7
(22) Anmeldetag: 02.11.2010
(51) Int. Cl.: B29C 45/66, B29C 45/32

(54) **SCHLIESSEINHEIT FÜR EINE SPRITZGIESSMASCHINE**
CLOSING UNIT FOR A INJECTION MOULDING MACHINE
UNITÉ DE FERMETURE POUR UNE MACHINE DE MOULAGE PAR INJECTION

(30) Priorität: 04.11.2009 DE 102009051934
(43) Veröffentlichungstag der Anmeldung: 12.09.2012
(73) Patentinhaber: KraussMaffei Technologies GmbH, 80997 München (DE)
(72) Erfinder: REINHARDT, Thomas, 85653 Aying (DE)
(74) Vertreter: Wilhelm, Ludwig
(86) Internationale Anmeldenummer: PCT/EP2010/006660
(87) Internationale Veröffentlichungsnummer: WO 2011/054488

(56) Entgegenhaltungen:
- EP-A1- 0 895 848
- WO-A1-2005/115718
- US-A- 4 154 566
- US-A- 4 207 051
- US-A- 4 734 023
- US-A- 5 578 333

## Beschreibung

Die Erfindung betrifft eine Schließeinheit für eine Spritzgießmaschine gemäß dem Oberbegriff von Anspruch 1. Eine derartige Schließeinheit ist aus der gattungsbildenden EP1755858B1 bekannt. Es handelt sich um eine sogenannte Drei-Platten-Schließeinheit mit einer feststehenden Formaufspannplatte, einer beweglichen Formaufspannplatte und einer Abstützplatte, wobei zwischen der Abstützplatte und der beweglichen Formaufspannplatte ein Antriebsmechanismus zum Verfahren der beweglichen Formaufspannplatte vorgesehen ist. Der Antriebsmechanismus dieser bekannten Schließeinheit ist als Kurbelantrieb ausgebildet, bei dem eine von einem Elektromotor oder Hydromotor angetriebene Kurbelscheibe vorgesehen ist, welche über zumindest ein Pleuel erster Art mit der Abstützplatte und über zumindest ein Pleuel zweiter Art mit der beweglichen Formaufspannplatte verbunden ist. Beim Betrieb des Kurbelantriebs kommt es sowohl zu einer Relativbewegung zwischend Kurbelantrieb und Abstützplatte sowie zwischen Kurbelantrieb und beweglicher Formaufspannplatte.

Ausgehend von diesem Stand der Technik liegt der Erfindung die Aufgabe zugrunde, die gattungsbildende Schließeinheit dahingehend weiter zu entwickeln, dass sie in einfacher Art und Weise auch für Etagen- und/oder Wendeplattenanwendungen geeignet ist. Bei Etagenanwendungen bzw. Etagenspritzgießmaschinen ist zwischen zwei äußeren Formaufspannplatten eine weitere nicht drehbare Formaufspannplatte vorgesehen. Bei Wendeplattenanwendungen bzw. Wendeplatten-Spritzgießmaschinen ist zwischen zwei äußeren Formaufspannplatten ein mittlerer Formträger vorgesehen, der um eine vertikale oder eine horizontale Achse drehbar ist.

Zur Lösung der vorgenannten Aufgabe wird erfindungsgemäß vorgeschlagen, zwischen den beiden äußeren Formaufspannplatten einen weiteren Formträger vorzusehen, wobei zwischen dem weiteren Formträger und der Antriebseinheit eine Verbindung vorgesehen ist, so dass der weitere Formträger dem Bewegungszustand der Antriebseinheit folgen muss. Man macht sich also die Tatsache zu nutze, dass die Antriebseinheit selbst hin und her verfahren wird. Durch die vorgenannte Verbindung wird der weitere Formträger von der Antriebseinheit mitgenommen oder - anders ausgedrückt - der weitere Formträger muss die Bewegung der Antriebseinheit zwangsweise mitmachen. Somit kann auf einen eigenen Antrieb zum Verfahren des weiteren Formträgers verzichtet werden.

Der Verfahrweg des weiteren Formträgers hängt unter anderem davon ab, mit welcher Exzentrizität die Pleuel erster und zweiter Art an der Kurbelscheibe angebracht sind. Weiterhin kommt es auf die Länge der Pleuel erster und zweiter Art an. Sind die Pleuel erster und zweiter Art nämlich gleich lang und außerdem mit gleicher Exzentrizität an der Kurbelscheibe angelenkt, wie dies gemäß der Weiterbildung von Anspruch 2 vorgesehen ist, kommt es beim Verfahren der Antriebseinheit zu folgender Situation. Die Antriebseinheit vollzieht den halben Weg wie die bewegliche Formaufspannplatte. Durch die Verbindung zwischen dem weiteren Formträger und der Antriebseinheit vollzieht auch der weiteren Formträger den halben Weg wie die bewegliche Formaufspannplatte. Beim Betrieb der Schließeinheit werden also die beiden Arbeitsbereiche zu beiden Seiten des weiteren Formträgers um den gleichen Hub auf- und zugefahren. Im geöffneten Zustand der Schießeinheit liegt somit zwischen dem weiteren Formträger und den beiden äußeren Formaufspannplatten ein gleicher Abstand vor.

Da die Formeinbauhöhen in den beiden Arbeitsbereichen zu beiden Seiten des weiteren Formträgers einen Unterschied aufweisen können, kann in Weiterbildung der Erfindung eine erste Verstelleinrichtung in der Verbindung zwischen dem weiteren Formträger und der Antriebseinheit vorgesehen werden, um die Position des weiteren Formträgers in Bezug auf die beiden äußeren Formaufspannplatten verändern bzw. einstellen zu können. Die Verstelleinrichtung kann von Hand oder elektromotorisch betrieben werden. Mittels der Verstelleinrichtung kann auch eine Korrektur der Position des weiteren Formträgers in Bezug auf die beiden äußeren Formaufspannplatten vorgenommen werden. Dies kann beispielsweise dann erforderlich sein, wenn sich eine im kalten Zustand der Spritzgießmaschine richtig eingestellte Position verändert, weil es beim Betrieb der Spritzgießmaschine zu einer Erwärmung und einer sich daraus ergebenden Längenausdehnung der gesamten Schließeinheit kommt. Dies kann dazu führen, dass die ursprünglich im kalten Zustand eingestellte Position nicht mehr passt und eine Nacheinstellung erforderlich wird.

Der weitere Formträger kann als Schiebetisch ausgebildet sein, der unmittelbar zur Aufnahme von Formen oder Formhälften ausgebildet ist. In diesem Fall besteht die Verbindung zwischen dem Schiebetisch und der Antriebseinheit. Der weitere Formträger kann aber auch auf dem Schiebetisch befestigt sein, wobei dann die Verbindung zwischen dem Schiebetisch und der Antriebseinheit oder zwischen dem weiteren Formträger und der Antriebseinheit bestehen kann.

Für Etagenanwendungen genügt es, den weiteren Formträger lediglich in Maschinenlängsrichtung verfahren zu können. Hingegen ist es für Wendeplattenanwendungen erforderlich, dass die Formen bzw. Formhälften auf dem weiteren Formträger um eine vorzugsweise vertikale Achse drehbar sind. Zu diesem Zweck weist der Schiebetisch einen Drehteller auf, auf dem die Formen oder der mittlere Formträger angebracht werden kann. Der auf dem Schiebetisch befestigte weitere Formträger kann eine Mittelplatte mit zwei einander gegenüberliegenden Formaufspannflächen sein. Er kann aber auch als würfelförmiger oder prismatischer Formträger ausgebildet sein.

Im Bedarfsfalle kann oberhalb des weiteren Formträgers eine Einrichtung zur Medienversorgung vorgesehen sein, mit der der weitere Formträger und/oder die auf diesem weiteren Formträger anordenbaren Formen mit Medien versorgt werden können. Bei diesen Medien kann es sich um flüssige oder gasförmige Medien, insbesondere zur Temperierung, oder um elektrischen Strom handeln, insbesondere zur Signalübertragung oder zur Betätigung von Aktuatoren wie zum Beispiel Kernzüge oder Auswerfer. In diesem Fall kann es sinnvoll sein, zwischen der Einrichtung zur Medienversorgung und der Antriebseinheit ebenfalls eine Verbindung vorzusehen, so dass die Einrichtung zur Medienversorgung dem Bewegungszustand der Antriebseinheit folgen muss. Durch die vorgenannte Verbindung wird die Einrichtung zur Medienversorgung von der Antriebseinheit mitgenommen oder - anders ausgedrückt - die Einrichtung zur Medienversorgung muss die Bewegung der Antriebseinheit zwangsweise mitmachen. Somit kann auf einen eigenen Antrieb zum Verfahren der Einrichtung zur Medienversorgung verzichtet werden. Die Einrichtung zur Medienversorgung kann vorzugsweise an einer Traverse befestigt sein, die oberhalb des weiteren Formträgers angeordnet und verschieblich an den oberen Säulen der Schließeinheit angebracht ist, wobei die Verbindung zwischen der Traverse und der Antriebseinheit oder zwischen der Einrichtung zur. Medienversorgung und der Antriebseinheit bestehen kann. Gegebenenfalls kann eine zweite Verstelleinrichtung vorgesehen werden, mit der von Hand oder motorisch der Abstand zwischen der Einrichtung zur Medienversorgung und der Antriebseinheit einstellbar ist. Mittels der Verstelleinrichtung kann auch eine Korrektur der Position der Einrichtung zur Medienversorgung in Bezug auf die beiden äußeren Formaufspannplatten vorgenommen werden. Dies kann erforderlich sein, wenn sich eine im kalten Zustand der Spritzgießmaschine richtig eingestellte Position verändert, weil es beim Betrieb der Spritzgießmaschine zu einer Erwärmung und einer sich daraus ergebenden Längenausdehnung der gesamten Schließeinheit kommt. Dies kann dazu führen, dass die ursprünglich im kalten Zustand eingestellte Position nicht mehr passt und eine Nacheinstellung erforderlich wird. Gegebenenfalls müssen sowohl die Position der Einrichtung zur Medienversorgung als auch die Position des mittleren Formträgers nacheingestellt werden, so dass beide Positionen für einen ordnungsgemäßen Betrieb der Schließeinheit korrekt sind.

Nachfolgend soll die Erfindung anhand von Ausführungsbeispielen und unter Bezugnahme auf die Figuren näher erläutert werden, wobei die Schließeinheit jeweils in Seitendarstellung gezeigt ist und der Einfachheit halber auf die Darstellung der Formwerkzeuge verzichtet worden ist. Es zeigen:
- Fig. 1: Schließeinheit in geschlossenem Zustand mit handbetätigter Verstelleinrichtung für den Abstand von Antriebseinheit und mittlerem Formträger;
- Fig. 2: Schließeinheit in geöffnetem Zustand mit handbetätigter Verstelleinrichtung für den Abstand von Antriebseinheit und mittlerem Formträger;
- Fig. 3: Schließeinheit wie in Fig.1, jedoch mit elektromotorisch betätigter Verstelleinrichtung;
- Fig. 4: Schließeinheit wie in Fig.2, jedoch mit elektromotorisch betätigter Verstelleinrichtung;
- Fig. 5: Schließeinheit wie in Fig.1, zusätzlich mit Einrichtung zur Medienversorgung;
- Fig. 6: Schließeinheit wie in Fig.2, zusätzlich mit Einrichtung zur Medienversorgung;
- Fig. 7: Schließeinheit wie in Fig. 3 mit möglichen Anordnungen von Spritzeinheiten;
- Fig. 8: Schließeinheit wie in Fig. 4 mit möglichen Anordnungen von Spritzeinheiten.

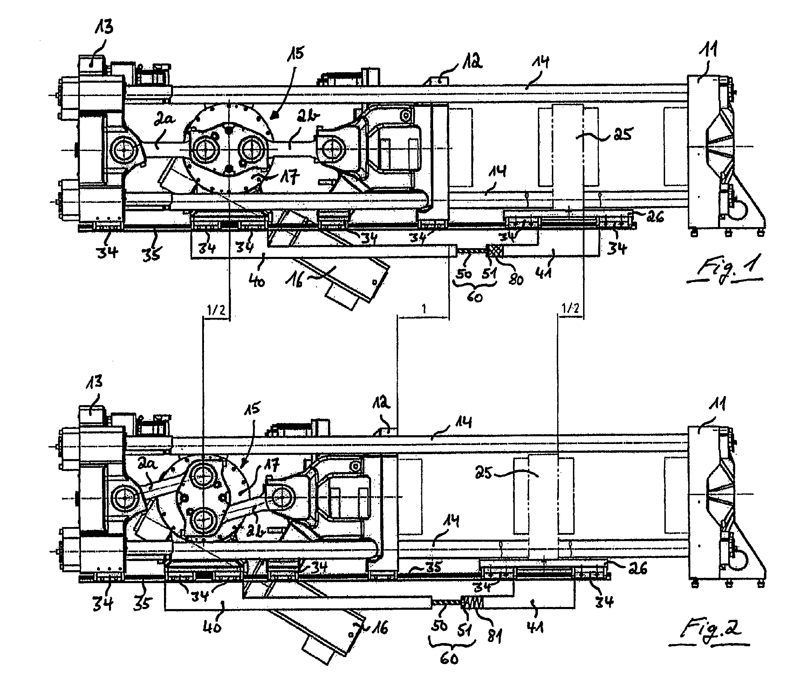

Die in der Figur 1 dargestellte Schließeinheit umfasst eine feststehende Formaufspannplatte 11, eine bewegliche Formaufspannplatte 12 und eine Abstützplatte 13. Zwischen der feststehenden Formaufspannplatte 11 und der Abstützplatte 13 erstrecken sich vier Säulen 14 zur Aufnahme der Schließkraft, wobei nur die beiden vorderen Säulen sichtbar sind. Zwischen der Abstützplatte 13 und der beweglichen Formaufspannplatte 12 ist eine Antriebseinheit 15 vorgesehen, wie sich für sich genommen aus der EP1755858B1 bekannt ist. Sie umfasst im wesentlichen einen Elektro- oder Hydromotor 16, dessen Antriebswelle in geeigneter Weise antriebstechnisch mit der oder den Kurbelscheibe(n) 17 verbunden ist, so dass diese beim Betrieb des Motors 16 in Rotation versetzt wird, wobei sowohl eine Drehung im Uhrzeigersinn als auch im Gegenuhrzeigersinn möglich ist. Ein oder mehrere Pleuel erster Art 2a sind mit ihrem einen Ende exentrisch an der Kurbelscheibe 17 und mit ihrem anderen Ende an der Abstützplatte 13 angelenkt. Ein oder mehrere Pleuel zweiter Art 2b sind mit ihrem einen Ende exentrisch an der Kurbelscheibe 17 und mit ihrem anderen Ende an der beweglichen Formaufspannplatte 12 angelenkt. Die Pleuel erster und zweiter Art 2a, 2b sind vorliegend gleich lang und jeweils mit gleicher Exzentrizität an der Kurbelscheibe 17 angelenkt.

Zwischen den beiden Formaufspannplatten 11 und 12 ist ein Schiebetisch 26 angeordnet, auf dem ein weiterer Formträger 25 befestigt ist. Der Schiebetisch 26 kann aber auch so aufgebaut sein, dass er unmittelbar zur Aufnahme von Formen oder Formhälften geeignet ist. Für den Fall von Wendeplattenanwendungen weist der Schiebetisch einen um eine vertikale Achse drehbaren Drehteller auf, dessen Unterseite in geeigneter Weise mittels Lager drehbar in oder auf dem Schiebetisch abgestützt ist und auf dessen Oberseite die Formen oder der mittlere Formträger angebracht werden kann. Der auf dem Schiebetisch 26 befestigte weitere Formträger 25 kann eine Mittelplatte mit zwei einander gegenüberliegenden Formaufspannflächen sein. Er kann aber auch als würfelförmiger oder prismatischer Formträger ausgebildet sein. Nicht dargestellt sind die für den Fachmann an sich bekannten Maßnahmen zum Antreiben des Drehtellers. Im Bereich des Schiebetisches 26 ist die vordere unterere Säule unterbrochen dargestellt, so dass man die Anbringung des mittleren Formträgers 25 auf der Oberseite des Schiebetischs 26 erkennen kann sowie abschnittsweise die hintere untere Säule.

Die Abstützplatte 13, die Antriebseinheit 15, die bewegliche Formaufspannplatte 12 sowie der Schiebetisch 26 sind mittels geeigneter Gleitschuhe 34 verschieblich auf Führungsschienen 35 eines nicht näher dargestellten Maschinenbetts abgestützt.

Erfindungsgemäß ist zwischen dem Schiebetisch 26 und der Antriebseinheit 15 eine Verbindung vorgesehen, so dass der Schiebetisch dem Bewegungszustand der Antriebseinheit 15 folgen muss. Im dargestellten Beispiel wird diese Verbindung von zwei Verbindungselementen 40 und 41 gebildet, die über eine Spindel 50 und eine Spindelmutter 51 untereinander verbunden sind. Das eine Verbindungselement 40 ist mit seinem der Spindel 50 abgewandten Ende an der Antriebseinheit 15 befestigt, wohingegen das andere Verbindungselement 41 mit seinem der Spindel 50 abgewandten Ende an dem Schiebetisch 26 befestigt ist. Spindel 50 und Spindelmutter 51 bilden eine Verstelleinrichtung 60 zum Einstellen des Abstandes zwischen Schiebetisch und Antriebseinheit. Die Spindel 50 kann hierzu beispielsweise an dem linken Verbindungselement 40 drehfest befestigt sein und in das Innere des rechten Verbindungselements 41 eintauchen, wozu dieses über eine geeignete Länge rohrförmig ausgebildet ist. Die Spindelmutter 51 ist drehbar an dem offenen Ende des rechten Verbindungselements 41 angebracht. Durch Betätigung der Spindelmutter 51 kann somit die Länge der Verbindung zwischen dem Schiebetisch 26 und der Antriebseinheit 15 verändert und damit die Position des Schiebetischs 26 zwischen den beiden Formaufspannplatten 11 und 12 verändert bzw. eingestellt werden. Damit ist es möglich, bei unterschiedlichen Formeinbauhöhen in den beiden Arbeitsbereichen zu beiden Seiten des Formträgers 25 die richtige Position des Schiebetischs einzustellen. Gegebenenfalls kann ein elastisches Element in der Verbindung zwischen dem mittleren Formträger 25 und der Antriebseinheit 15 vorgesehen werden und zum Beispiel zwischen der Spindelmutter 51 und dem Verbindungselement 41 angeordnet sein. Beispielsweise kann man einen Block 80 aus einem elastischen Material -wie in der Figur 1 dargestellt - oder ein Federpaket 81 - wie in der Figur 2 dargestellt - verwenden. Mittels eines solchen elastischen Elements können geringfügige Abweichungen der Position des mittleren Formträgers 25 von einer gewünschten Sollposition ausgeglichen werden. Darüberhinaus ergibt sich auf diese Weise auch ein gewisser Dämpfungseffekt, wenn die Formhälften auf dem mittleren Formträger 25 in Kontakt mit den Formhälften auf den äußeren Formaufspannplatten 11 und 12 kommen.

Wie aus den Figuren 1 und 2 zu erkennen ist, wird beim Übergang vom geschlossenen Zustand der Schließeinheit gemäß Figur 1 in den geöffneten Zustand der Schließeinheit gemäß Figur 2 die bewegliche Formaufspannplatte um eine Strecke S = 1 verfahren, wohingegen die Einheit aus Antriebseinheit 15 und Schiebetisch 26 um eine Strecke S = 1/2 verfahren wird. Der Schiebetisch kann somit ohne eigenen Antrieb in dem Raum zwischen den beiden Formaufspannplatte 11 und 12 hin und her verfahren werden, wobei er jeweils um die Hälfte derjenigen Wegstrecke verfahren wird, um die die bewegliche Formaufspannplatte 12 verfahren wird.

Anstelle von oder zusätzlich zu der Verbindung zwischen Schiebetisch 26 und Antriebseinheit 15 kann auch ein Verbindung zwischen dem auf dem Schiebetisch befestigten Formträger 25 und der Antriebseinheit 15 vorgesehen werden.

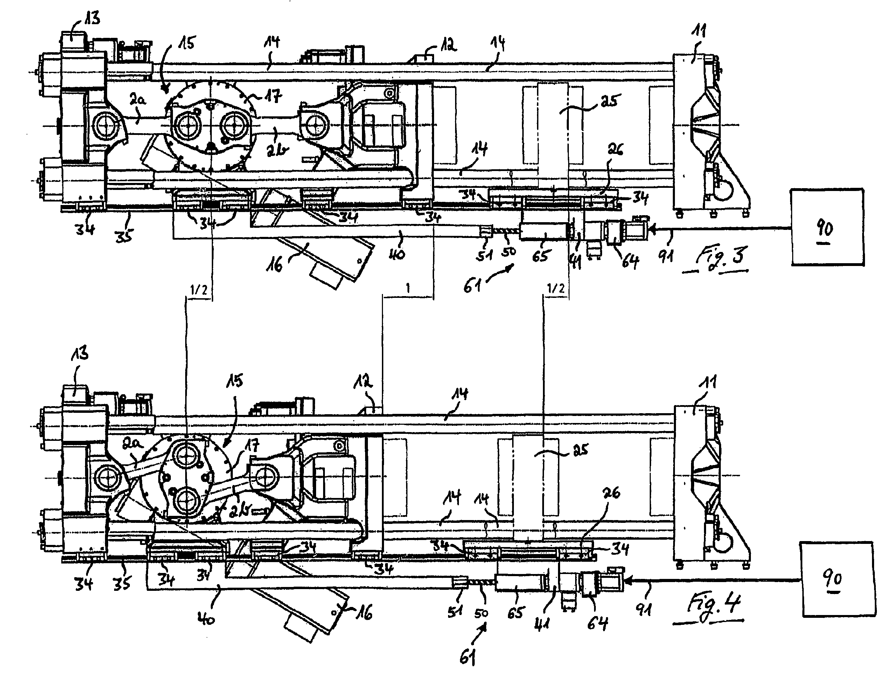

Die in den Figuren 3 und 4 dargestellte Schließeinheit unterscheidet sich von der vorher beschriebenen Schließeinheit lediglich in der Verstelleinrichtung in der Verbindung zwischen Schiebetisch 26 und Antriebseinheit 15. Anstelle der von Hand betätigbaren Verstelleinrichtung 60 ist nunmehr eine elektromotorisch betriebene Verstelleinrichtung 61 vorgesehen. Das an dem Schiebetisch 26 befestigte Verbindungselement 41 ist so ausgebildet, dass es zur Befestigung eines Elektromotors 64 geeignet ist. Die Verstelleinrichtung 61 kann in vielfältiger Weise ausgebildet und von dem Elektromotor 64 betätigt werden. Beispielsweise kann die Spindel 50 mit der Antriebswelle des Elektromotors 64 gekoppelt sein und damit von dem Elektromotor 64 drehangetrieben werden. Die Spindelmutter 51 sitzt drehfest am rechten Ende des Verbindungselements 40 und die Spindel 50 kann in das Innere des linken Verbindungselements 40 eintauchen, wozu dieses über eine geeignete Länge rohrförmig ausgebildet. Denkbar ist aber auch, dass der Elektromotor 64 eine Spindelmutter drehantreibt, die beispielsweise in einem Gehäuseteil 65 untergebracht sein kann, und dass die Spindel 50 drehfest an dem linken Verbindungselement 40 befestigt ist. Die Schließeinheit gemäß den Figuren 3 und 4 ergibt in gleicher Weise eine zwangsweise Mitnahme des Schiebetischs 26 beim Verfahren der Antriebseinheit 15 wie oben im Zusammenhang mit den Figuren 1 und 2 beschrieben. Mittels der Verstelleinrichtung kann auch eine Korrektur der Position des weiteren Formträgers 25 in Bezug auf die beiden äußeren Formaufspannplatten 11 und 12 vorgenommen werden, wenn sich eine eingestellte richtige Position während des Betriebs der Spritzgießmaschine verlagert. Dies kann beispielsweise dann der Fall sein, wenn sich eine im kalten Zustand der Spritzgießmaschine richtig eingestellte Position (beispielsweise in der Offenstellung oder in der Schließstellung der Schließeinheit) verändert, weil es beim Betrieb der Spritzgießmaschine zu einer Erwärmung und einer sich daraus ergebenden Längenausdehnung der gesamten Schließeinheit kommt. Dies kann dazu führen, dass die ursprünglich im kalten Zustand eingestellte Position (beispielsweise in der Offenstellung oder in der Schließstellung der Schließeinheit) nicht mehr passt und eine Nacheinstellung erforderlich wird. Bei Verwendung einer elektromotorisch betriebenen Verstelleinrichtung 61 wie im Ausführungsbeispiel der Figuren 3 und 4, kann die Nacheinstellung bzw. die Nachführung der richtigen Position des mittleren Formträgers von der Steuerung 90 der Spritzgießmaschine veranlasst werden, indem geeignete Steuer- bzw. Stellsignale über eine Leitung 91 an den Elektromotor 64 abgegeben werden. In der Steuerung 90 kann ein fortlaufender Vergleich der aktuellen Ist-Position des mittleren Formträgers 25 mit einer vorgegebenen Soll-Position erfolgen, und beim Überschreiten vorgegebener Toleranzgrenzen kann der Elektromotor 64 über die Leitung 91 in der gewünschten Weise angesteuert und betätigt werden, um die Ist-Position der Soll-Position nachzuführen. Eine derartige Nacheinstellung der Position kann selbstverständlich auch bei einer von Hand betätigten Verstelleinrichtung vorgenommen werden.

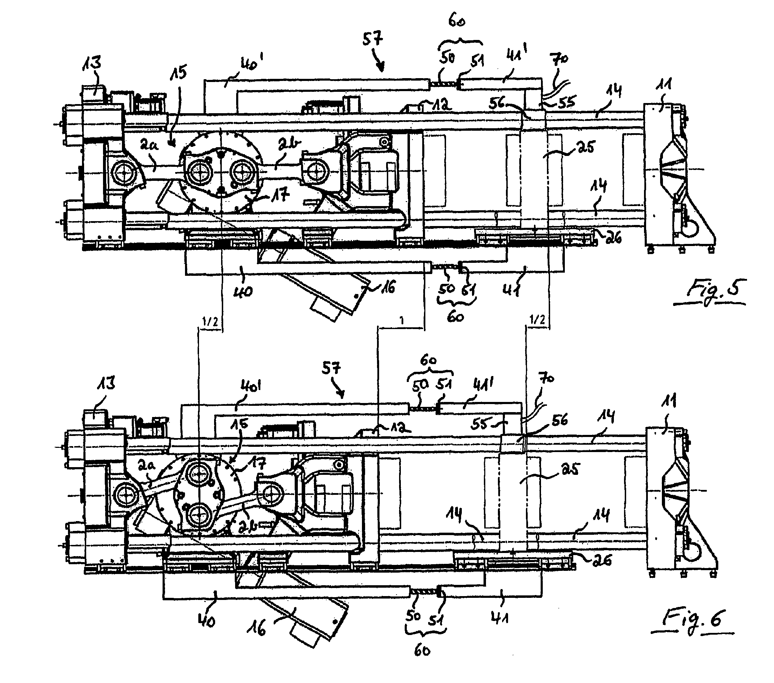

Bei der in den Figuren 5 und 6 dargestellten Ausführungsform ist oberhalb des Formträgers 25 eine Einrichtung 55 zur Medienversorgung vorgesehen, beispielsweise ein Drehverteiler 55, wie er bei einer Medienversorgung von drehbaren Formträgern üblich ist. Diese Einrichtung bzw. dieser Drehverteiler 55 kann auf einer Traverse 56 angebracht sein (genauer gesagt der drehfeste äußere Teil des Drehverteilers), die sich zwischen den oberen Säulen 14 erstreckt und diese ganz oder teilweise umgreift, so dass die Traverse 56 verschieblich an den oberen Säulen 14 abgestützt ist. Die Zufuhr der Medien kann je nach Art des Mediums über geeignete Schläuche oder Kabel 70 erfolgen, wie dies in den Figuren 5 und 6 schematisch angedeutet ist. Im Bedarfsfalle kann zwischen der Einrichtung 55 zur Medienversorgung und der Antriebseinheit 15 eine weitere Verbindung 57 vorgesehen werden, so dass beim Verfahren der Antriebseinheit 14 die Einrichtung 55 in gleicher Weise mitgenommen wird wie der Schiebetisch 26 über die untere Verbindung 40, 41, 60, 61. Diese zusätzliche Verbindung 57 kann auch an der Traverse 56 befestigt sein. Die zusätzliche Verbindung 57 kann aus einer oder mehreren durchgehenden Verbindungsstreben oder -stangen bestehen. Die obere Verbindung 57 kann aber auch in gleicher Weise wie die untere Verbindung ausgebildet sein und über eine Verstelleinrichtung verfügen, wie sie im Zusammenhang mit den Figuren 1 bis 4 beschrieben worden ist, um den Abstand zwischen der Einrichtung zur Medienversorgung und der Antriebseinheit einstellen zu können. Die obere Verbindung 57 kann also grundsätzlich aus den gleichen Elementen aufgebaut sein wie die untere Verbindung zwischen Antriebseinheit 15 und Schiebetisch 26. Lediglich die konkrete Ausgestaltung von linkem Verbindungselement 40' und rechtem Verbindungselement 41' kann anders sein. Anstelle der von Hand betätigbaren Verstelleinrichtung 60 können unten und/oder oben auch elektromotorisch betriebene Verstelleinrichtungen 61 vorgesehen werden, wie sie im Zusammenhang mit den Figuren 3 und 4 beschrieben worden sind. Bei der oberen Verbindung 57 kann gegebenenfalls in gleicher Weise ein elastisches Element vorgesehen sein, wie es im Zusammenhang mit den Figuren 1 und 2 für die untere Verbindung beschrieben worden ist. Ferner kann bei der oberen Verbindung 57 eine Nachführen einer Ist-Position zu einer Soll-Position vorgesehen werden, wie dies oben im Zusammenhang mit den Figuren 3 und 4 beschrieben worden ist.

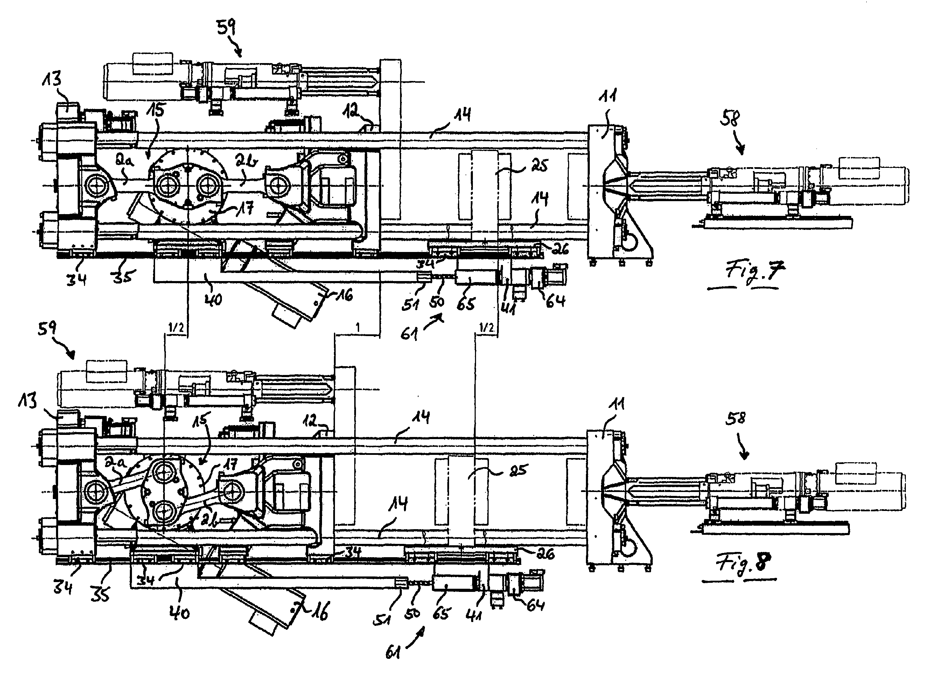

In den Figuren 7 und 8 ist schematisch dargestellt, wie einer erfindungsgemäßen Schließeinheit mehrere Spritzeinheiten 58 und 59 zugeordnet werden können. Die der beweglichen Formaufspannplatte zugeordnete Spritzeinheit kann neben der dargestellten Anordnung oberhalb der Schließeinheit auch seitlich der Schließeinheit angeordnet werden, entweder in paralleler Stellung oder in L-Stellung.

### Bezugszeichenliste

- 2a: Pleuel erster Art
- 2b: Pleuel zweiter Art
- 11: Feststehende Formaufspannplatte
- 12: Bewegliche Formaufspannplatte
- 13: Abstützplatte
- 14: Säulen
- 15: Antriebseinheit
- 16: Elektro- oder Hydromotor
- 17: Kurbelscheiben(n)
- 25: Mittlerer Formträger
- 26: Schiebetisch
- 34: Gleitschuhe
- 35: Führungsschienen
- 40: Erstes, linkes Verbindungselement (unten)
- 40': Erstes, linkes Verbindungselement (oben)
- 41: Zweites, rechtes Verbindungselement (unten)
- 41': Zweites, rechtes Verbindungselement (oben)
- 50: Spindel
- 51: Spindelmutter
- 55: Drehverteiler
- 56: Traverse
- 57: Verbindung
- 58: Spritzeinheit
- 59: Spritzeinheit
- 60: Verstelleinrichtung
- 61: Verstelleinrichtung
- 64: Elektromotor
- 65: Gehäuseteil
- 70: Schlauch oder Kabel
- 80: Elastischer Block
- 81: Federpaket
- 90: Steuerung
- 91: Signalleitung

## Patentansprüche

1. Schließeinheit für eine Spritzgießmaschine, umfassend eine feststehende Formaufspannplatte (11), eine Abstützplatte (13), eine zwischen der feststehenden Formaufspannplatte (11) und der Abstützplatte (13) hin und her verfahrbare bewegliche Formaufspannplatte (12), eine zwischen der Abstützplatte (13) und der beweglichen Formaufspannplatte (12) angeordnete Antriebseinheit (15) mit wenigstens einer drehantreibbaren Kurbelscheibe (17), wobei die Kurbelscheiben (17) der Antriebseinheit (15) über zumindest ein Pleuel erster Art (2a) mit der Abstützplatte (13) und über zumindest ein Pleuel zweiter Art (2b) mit der beweglichen Formaufspannplatte (12) verbunden ist, wobei die Pleuel erster (2a) und zweiter Art (2b) exzentrisch an den Kurbelscheiben (17) angelenkt sind,
**dadurch gekennzeichnet, dass**
zwischen den beiden Formaufspannplatten (11, 12) ein weiterer Formträger (25, 26) vorgesehen ist, und dass zwischen dem weiteren Formträger (25, 26) und der Antriebseinheit (15) eine Verbindung (40, 41, 50, 51) vorgesehen ist, so dass der weitere Formträger (25, 26) dem Bewegungszustand der Antriebseinheit (15) folgen muss.

2. Schließeinheit nach Anspruch 1,
**dadurch gekennzeichnet, dass**
die Pleuel erster (2a) und zweiter Art (2b) gleich lang sind, und/oder dass die Pleuel erster (2a) und zweiter Art (2b) jeweils mit gleicher Exzentrizität an der Kurbelscheibe (17) angelenkt sind.

3. Schließeinheit nach einem der vorstehenden Ansprüche,
**dadurch gekennzeichnet, dass**
eine erste Verstelleinrichtung (60, 61) vorgesehen ist, mit der von Hand oder motorisch der Abstand zwischen dem weiteren Formträger (25, 26) und der Antriebseinheit (15) einstellbar ist.

4. Schließeinheit nach einem der vorstehenden Ansprüche,
**dadurch gekennzeichnet, dass**
als weiterer Formträger ein Schiebetisch (26) vorgesehen ist, der unmittelbar zur Aufnahme von Formen oder Formhälften ausgebildet ist.

5. Schließeinheit nach Anspruch 4,
**dadurch gekennzeichnet, dass**
der Schiebetisch (26) einen um eine vertikale Achse drehbaren Drehteller aufweist, so dass die Formen oder Formhälften um diese vertikale Achse gedreht werden können.

6. Schließeinheit nach einem der vorstehenden Ansprüche,
**dadurch gekennzeichnet, dass**
dass ein Schiebetisch (26) vorgesehen ist und dass der weitere Formträger (25) auf dem Schiebetisch (26) befestigt ist, wobei die Verbindung (40, 41, 50, 51) zwischen dem Schiebetisch (26) und der Antriebseinheit (15) oder zwischen dem weiteren Formträger (25) und der Antriebseinheit (15) besteht.

7. Schließeinheit nach Anspruch 6,
**dadurch gekennzeichnet, dass**
der weitere Formträger (25) um eine vertikale Achse drehbar ist.

8. Schließeinheit nach einem der vorstehenden Ansprüche,
**dadurch gekennzeichnet, dass**
oberhalb des weiteren Formträgers (25) eine Einrichtung (55) zur Medienversorgung vorgesehen, mit der der weitere Formträger (25) und/oder die auf diesem weiteren Formträger (25) anordenbaren Formen mit Medien versorgt werden können, wobei zwischen der Einrichtung (55) zur Medienversorgung und der Antriebseinheit (15) eine Verbindung (57) vorgesehen ist, so dass die Einrichtung (55) zur Medienversorgung dem Bewegungszustand der Antriebseinheit (15) folgen muss.

9. Schließeinheit nach Anspruch 8,
**dadurch gekennzeichnet, dass**
die Einrichtung (55) zur Medienversorgung an einer Traverse (56) befestigt ist, die oberhalb des weiteren Formträgers (25) angeordnet und verschieblich an oberen Säulen (14) der Schließeinheit angebracht ist, wobei die Verbindung (57) zwischen der Traverse (56) und der Antriebseinheit (15) oder zwischen der Einrichtung (55) zur Medienversorgung und der Antriebseinheit (15) besteht.

10. Schließeinheit nach Anspruch 7 oder 8,
**dadurch gekennzeichnet, dass**
eine zweite Verstelleinrichtung vorgesehen ist, mit der von Hand oder motorisch der Abstand zwischen der Einrichtung (55) zur Medienversorgung und der Antriebseinheit (15) einstellbar ist.

## Claims

1. A clamping unit for an injection moulding machine, comprising a stationary mould platen (11), a support plate (13), a mould platen (12) movable so as to be able to be displaced to and fro between the stationary mould platen (11) and the support plate (13), a drive unit (15), arranged between the support plate (13) and the movable mould platen (12) having at least one crank disc (17) which is able to be driven rotatably, wherein the crank discs (17) of the drive unit (15) are connected via at least one connecting rod of a first type (2a) with the support plate (13) and via at least one connecting rod of a second type (2b) with the movable mould platen (12), wherein the connecting rods of first type (2a) and second type (2b) are articulated eccentrically on the crank discs (17),
**characterized in that**
between the two mould platens (11, 12) an additional mould carrier (25, 26) is provided, and that between the additional mould carrier (25, 26) and the drive unit (15) a connection (40, 41, 50, 51) is provided, so that the additional mould carrier (25, 26) must follow the state of motion of the drive unit (15).

2. The clamping unit according to Claim 1,
**characterized in that**
the connecting rods of first type (2a) and second type (2b) are of equal length, and/or that the connecting rods of first type (2a) and second type (2b) are respectively articulated with identical eccentricity on the crank disc (17).

3. The clamping unit according to one of the preceding claims,
**characterized in that**
a first adjusting device (60, 61) is provided, by which the distance between the additional mould carrier (25, 26) and the drive unit (15) is able to be adjusted manually or in a motor-driven manner.

4. The clamping unit according to one of the preceding claims,
**characterized in that**
as additional mould carrier a sliding table (26) is provided, which is constructed directly for receiving moulds or mould halves.

5. The clamping unit according to Claim 4,
**characterized in that**
the sliding table (26) has a rotary plate which is rotatable about a vertical axis, so that the moulds or mould halves can be rotated about this vertical axis.

6. The clamping unit according to one of the preceding claims,
**characterized in that**
a sliding table (26) is provided and that the additional mould carrier (25) is fastened on the sliding table (26), wherein the connection (40, 41, 50, 51) exists between the sliding table (26) and the drive unit (15) or between the additional mould carrier (25) and the drive unit (15).

7. The clamping unit according to Claim 6,
**characterized in that**
the additional mould carrier (25) is rotatable about a vertical axis.

8. The clamping unit according to one of the preceding claims,
**characterized in that**
above the additional mould carrier (25) a device (55) is provided for the supply of media, by which the additional mould carrier (25) and/or the moulds which are able to be arranged on this additional mould carrier (25) can be supplied with media, wherein between the device (55) for the supply of media and the drive unit (15) a connection (57) is provided, so that the device (55) for the supply of media must follow the state of motion of the drive unit (15).

9. The clamping unit according to Claim 8,
**characterized in that**
the device (55) for the supply of media is fastened to a cross-piece (56) which is arranged above the additional mould carrier (25) and is mounted displaceably on upper columns (14) of the clamping unit, wherein the connection (57) exists between the cross-piece (56) and the drive unit (15) or between the device (55) for the supply of media and the drive unit (15).

10. The clamping unit according to Claim 7 or 8,
**characterized in that**
a second adjusting device is provided, by which the distance between the device (55) for the supply of media and the drive unit (15) is able to be adjusted manually or in a motor-driven manner.

## Revendications

1. Unité de fermeture pour une machine de moulage par injection, comprenant une plaque de serrage de moule fixe (11), une plaque d'appui (13), une plaque de serrage de moule mobile (12) et pouvant être déplacée entre la plaque de serrage de moule fixe (11) et la plaque d'appui (13), une unité d'entraînement (15) disposée entre la plaque d'appui (13) et la plaque de serrage de moule mobile (12) comprenant au moins une flasque de manivelle (17) pouvant être entraînée en rotation, sachant que la flasque de manivelle (17) de l'unité d'entraînement (15) est reliée à la plaque d'appui (13) par,au moins une bielle d'un premier type (2a) et à la plaque de serrage de moule mobile (12) par au moins une bielle d'un second type (2b), sachant que les bielles de premier (2a) et de second (2b) type sont articulées de manière excentrique sur la flasque de manivelle (17),
**caractérisé en ce qu'**
un support de moule supplémentaire (25, 26) est prévu entre les deux plaques de serrage de moule (11, 12) et qu'une liaison (40, 41, 50, 51) est prévue entre le support de moule supplémentaire (25, 26) et l'unité d'entraînement (15), de telle sorte que le support de moule supplémentaire (25, 26) doit suivre l'état de déplacement de l'unité d'entraînement (15).

2. Unité de fermeture selon la revendication 1,
**caractérisée en ce que**
les bielles de premier (2a) et de second (2b) type ont la même longueur et/ou que les bielles de premier (2a) et de second (2b) type sont respectivement articulées avec la même excentricité sur la flasque de manivelle (17).

3. Unité de fermeture selon la revendication 1 ou 2,
**caractérisée en ce qu'**
un premier dispositif de réglage (60, 61) est prévu, avec lequel la distance entre le support de moule supplémentaire (25, 26) et l'unité d'entraînement (15) peut être réglée manuellement ou par moteur.

4. Unité de fermeture selon l'une des revendications précédentes,
**caractérisée en ce qu'**
un plateau coulissant (26) est prévu en tant que support supplémentaire, lequel est conçu pour recevoir directement des moules ou des moitiés de moule.

5. Unité de fermeture selon la revendication 4,
**caractérisée en ce que**
le plateau coulissant (26) présente un disque rotatif pouvant tourner sur un axe vertical de telle sorte que les moules ou les moitiés de moule peuvent être tourné(e)s sur cet axe vertical.

6. Unité de fermeture selon l'une des revendications précédentes,
**caractérisée en ce qu'**
un plateau coulissant (26) est prévu et que le support de moule supplémentaire (25) est fixé sur le plateau coulissant (26), sachant que la liaison (40, 41, 50, 51) se fait entre le plateau coulissant (26) et l'unité d'entraînement (15) ou entre le support de moule supplémentaire (25) et l'unité d'entraînement (15).

7. Unité de fermeture selon la revendication 6,
**caractérisée en ce que**
le support de moule supplémentaire (25) peut tourner sur un axe vertical.

8. Unité de fermeture selon l'une des revendications précédentes,
**caractérisée en ce qu'**
un dispositif (55) d'alimentation en fluide est prévu au-dessus du support de moule supplémentaire (25), avec lequel le support de moule supplémentaire (25) et/ou les moules pouvant être agencés sur ce support de moule supplémentaire (25) peuvent être alimentés en fluides, sachant qu'une liaison (57) est prévue entre le dispositif (55) d'alimentation en fluide et l'unité d'entraînement (15), de telle sorte que le dispositif (55) d'alimentation en fluide doit suivre l'état de déplacement de l'unité d'entraînement (15).

9. Unité de fermeture selon la revendication 8,
**caractérisée en ce que**
le dispositif (55) d'alimentation en fluide est fixé sur une traverse (56) qui est disposée au-dessus du support de moule supplémentaire (25) et est appliqué en pouvant être déplacé sur des colonnes supérieures (14) de l'unité de fermeture, sachant que la liaison (57) se fait entre la traverse (56) et l'unité d'entraînement (15) ou entre le dispositif (55) d'alimentation en fluide et l'unité d'entraînement (15).

10. Unité de fermeture selon la revendication 7 ou 8,
**caractérisée en ce qu'**
un deuxième dispositif de réglage est prévu, avec lequel la distance entre le dispositif (55) d'alimentation en fluide et l'unité d'entraînement (15) peut être réglée manuellement ou par moteur.
